Europäisches Patentamt

European Patent Office

Office européen des brevets

(19)

(11) Veröffentlichungsnummer: **0 162 289**
**B1**

(12) # EUROPÄISCHE PATENTSCHRIFT

(45) Veröffentlichungstag der Patentschrift:
31.08.88

(21) Anmeldenummer: **85104665.6**

(22) Anmeldetag: **17.04.85**

(51) Int. Cl.⁴: **B 23 H 7/08**

(54) **Drahtelektrode für Funkenerodieranlagen.**

(30) Priorität: **21.04.84 DE 3415054**

(43) Veröffentlichungstag der Anmeldung:
**27.11.85 Patentblatt 85/48**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**DE-A-2 906 245**

**PATENTS ABSTRACTS OF JAPAN, Band 7, Nr. 227
(M-248) 1372 , 7. Oktober 1983**

(73) Patentinhaber: **Berkenhoff GmbH, Eduard-Berkenhoff- Strasse 14, D-6301 Heuchelheim-Kinzenbach (DE)**

(72) Erfinder: **Dommer, Erich, Dipl.- Ing., Amselweg 4, D-6301 Heuchelheim (DE)**
Erfinder: **Groos, Heinrich, Hainstrasse 20, D-6348 Herborn (DE)**

(74) Vertreter: **Missling, Arne, Dipl.- Ing., Patentanwälte Dipl.- Ing. R. Schlee Dipl.- Ing. A. Missling Bismarckstrasse 43, D-6300 Giessen (DE)**

### Beschreibung

Die Erfindung betrifft eine Drahtelektrode für Funkenerodieranlagen zum Schneiden von Werkstücken durch erodierende, intermittierende elektrische Ladungen, mit einer Seele aus einem stromleitenden Werkstoff und einem Drahtüberzug aus einem Werkstoff mit einer niedrigeren Verdampfungstemperatur, wie z. B. Zink.

Als Drahtelektroden wurden anfangs reine Kupferdrähte verwendet, die durch Messingdrähte mit größerer mechanischer Zugfestigkeit ersetzt worden sind. Gegenüber der reinen Messingelektrode hat sich eine mit einem Überzug versehene Drahtelektrode als vorteilhaft erwiesen, d. h. mit einem Überzug aus einem Material, das eine niedrige Verdampfungstemperatur aufweist. Eine derartige Drahtelektrode ist aus der DE-A-2 906 245 bekannt geworden. Als besonders vorteilhaft hat sich ein Überzug aus Zink erwiesen, das in der Reihe der nach ihren Verdampfungspunkten geordneten Elemente das erste Metall ist, das frei von entsprechenden Verwendungßschwierigkeiten ist, wie sie sich etwa aus einer zu großen chemischen Reaktivität oder Toxizität ergeben. Dieses Metall trägt sich leicht ab bzw. erodiert leicht, was jedoch kein Nachteil ist, denn beim funkenerosiven Drahtschneidenwird das jeweils verwendete Drahtteil laufend erneuert.

Die mit Zink überzogenen Messingdrahtelektroden haben eine erhebliche Erhöhung der Schnittleistung gebracht, jedoch zeigen diese Messingdrahtelektroden noch den Nachteil, daß bei der Schlußglühung des Drahtes, um diesen auf die benötigte Festigkeit einzustellen, ein Teil des Zinks in die Messingseele eindiffundiert, was eine erhöhte Energie zum Freisetzen des für die Erodierwirkung benötigten Zinks erfordert.

Der Erfindung liegt die Aufgabe zugrunde, eine Drahtelektrode vorzuschlagen, die gegenüber der bekannt, mit einer Zinkschicht überzogenen Messingdrahtelektrode eine wesentlich erhöhte Schnittleistung aufweist und bei der das Eindiffundieren des Zinks in die Drahtseele wesentlich herabgesetzt ist.

Diese Aufgabe wird erfindungsgemäß mit den Merkmalen des kennzeichnenden Teils des Anspruches 1 gelöst.

Die für das Funkenerodierverfahren zum Einsatz kommenden Drahtelektroden haben einen Durchmesser, der zwischen 0,03 bis 0,4 mm besteht. Drahtelektroden mit Durchmessern, die kleiner als 0,1 mm sind, werden allerdings bislang nur für spezielle Anwendungen eingesetzt. Die bisherige Entwicklung bei den Drahtelektroden, die die Abkehr von den zuerst verwendeten Kupferdrähten auf Messingdrähte bewirkt hat, die mit Zink beschichtet sind, lief darauf hinaus, die Zugfestigkeit dieser Drahtelektroden zu erhöhen, um einen sauberen Schnittspalt zu erreichen. Die Abtragsleistung wurde dadurch gesteigert, daß die Drahtelektroden mit Zink beschichtet wurden, welches das Erodierverhalten wesentlich verbesserte. Die Anmelderin hat nun herausgefunden, daß bei der Verwendung einer Seele Cu Mg 0,4 oder einer der anderen, im Anspruch 1 genannten Legierungen, die in bekannter Weise mit einer Zinkschicht beschichtet sind, eine über 40 % erhöhte Schnittleistung erreichbar ist. Diese Erhöhung der Schnittleistung wird darauf zurückzuführen sein, daß zum einen die als Seele verwendeten Legierungen eine sehr gute elektrische Leitfähigkeit bei gleichzeitig noch guter mechanischer Festigkeit aufweisen, so daß der über die Drahtelektrode zugeführte Strom zur Erhöhung der Schnittleistung vergrößert werden kann. Darüberhinaus zeigen die Legierungen den Vorteil, daß bei angepaßter Glühbehandlung, eine nur geringfügige Diffusion der Zinkschicht in die Seele erfolgt, was den Vorteil hat, daß die gute elektrische Leitfähigkeit der Seele hierdurch nicht negativ beeinflußt wird. Dies bedingt gleichzeitig den Vorteil, daß bei gleicher elektrischer Belastung des Erodierdrahtes pro Zeiteinheit mehr freies Zink zur Verdampfung und Ionisation zur Verfügung steht. Darüberhinaus wird auch der zugeführte Strom in größerem Maße für die Erodierwirkung benutzt, während er bei einer starken Zinkdiffusion in die Oberfläche der Seele dieses Zink durch Zuführung elektrischer Entladeenergie erst wieder aus dem homogenen Mischkristallgefüge CuZn als freies Zink aktivieren muß.

In der anliegenden Figur sind die Schneidleistungen der bisher als Drahtelektroden eingesetzten Werkstoffe aufgezeigt. Hier hat das Aluminium die geringste Schneidleistung.

Es schließt sich hieran im Sinne höherer Schneidleistungen das Reineisen, das Molybdän und dann das Kupfer an. Mit Verwendung einer Messingelektrode konnten im Vergleich zur Kupferelektrode bereits erheblich höhere Schneidleistungen erzielt werden. Diese Schneidleistungen konnten noch einmal durch die Verzinkung der Drahtelektrode erhöht werden. Ein erheblich größerer Sprung in der Schneidleistung ist dann durch Verwendung der erfindungsgemäßen Drahtelektroden möglich.

Gemäß einem weiteren Vorschlag der Erfindung ist die Drahtelektrode zur Verminderung von Kurzschlüssen mit dem Werkstück, die jeweils eine Unterbrechung des Schneidvorgangs durch ein automatisch gesteuertes Abstellen, Zurück- und Wiederanfahren bedingen, sowie zum besseren Ablauf der Drähte durch Minderung der mechanischen Reibung auf den Vorratsspulen, den Draht führenden Rollen und Führungen mit einer isolierenden Schutzschicht versehen, die gleichzeitig auch die Funktion eines Gleitmittels übernimmt. Als besonders vorteilhaft hat sich hier eine Schutzschicht auf gesättigter aliphatischer Kohlenwasserstoffbasis herausgestellt. Durch diese Schutzschicht erreicht man lokal eine erhöhte Aufladung vor dem Funkenüberschlag, was zusätzlich noch zu einer weiteren Steigerung der Schneidleistung führt.

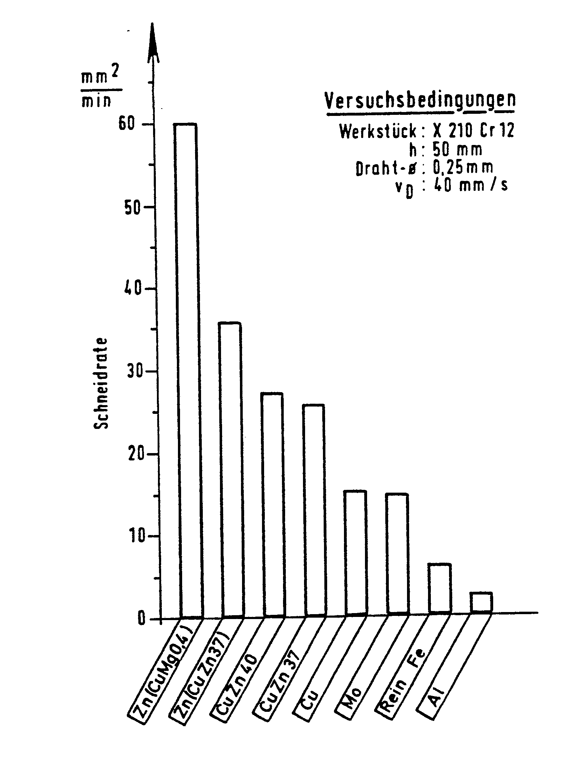

**Patentansprüche**

1. Drahtelektrode für Funkenerodieranlagen zum Schneiden von Werkstücken durch erodierende, intermittierende elektrische Ladungen, mit einer Seele aus einem stromleitenden Werkstoff und einem Drahtüberzug aus einem Werkstoff mit einer niedrigeren Verdampfungstemperatur, wie z. B. Zink, dadurch gekennzeichnet, daß die Seele aus einer der folgenden Legierungen gemäß DIN 17666 mit folgenden Zusammensetzungen in Gew.-% besteht:

a) Cu Mg 0,4 (0,3 - 0,5 % Mg; Verunreinigung < 0,3 %, Rest Cu)

b) Cu Fe 2P (Fe 2,1 - 2,6 %, P 0,015 - 0,15 %, Zn 0,05 - 0,20 %, Verunreinigung < 0,5 %, Rest Cu)

c) Cu Cr Zr (Cr 0,3 - 1,2 %, Zr 0,03 - 0,3 %, Verunreinigung < 0,2, Rest Cu)

d) Cu Zr (Zr 0,1 - 0,3 %, Verunreinigung < 0,2, Rest Cu).

2. Drahtelektrode nach Anspruch 1, dadurch gekennzeichnet, daß der Seele bis zu 0,5 % Ni und/oder Zn und/oder Pb zugesetzt ist.

3. Drahtelektrode nach Anspruch 1 oder 2, dadurch gekennzeichnet, daß die Drahtelektrode mit einer dünnen Isolierschicht überzogen ist, die gleichzeitig als Gleitmittel zur Verminderung der mechanischen Reibung dient.

4. Drahtelektrode nach Anspruch 3, dadurch gekennzeichnet, daß die isolierende Schicht auf Basis gesättigter aliphatischer Kohlenwasserstoffe aufgebaut ist.

**Claims**

1. A wire electrode for spark erosion installations for cutting workpieces using eroding, intermittent electric charges, having a core made of an electrically conductive material and a wire coating made of a material having a low vaporization temperature such as, for example, zinc, characterised in that the core is made from one of the following alloys in accordance with DIN 17666, having the following compositions in percentage by weight:

a) Cu Mg 0.4 (0.3-0.5 % Mg; impurity < 0.3 %, remainder Cu)

b) Cu Fe 2P (Fe 2.1 - 2.6 %, P 0.015 - 0.15 %, Zn 0.05 - 0.20 %, impurity < 0.5 %, remainder Cu)

c) Cu Cr Zr (Cr 0.3 - 1.2 %, Zr 0.03 - 0.3 %, impurity < 0.2, remainder Cu)

d) Cu Zr (Zr 0.1 - 0.3 %, impurity < 0.2, remainder Cu).

2. A wire electrode as claimed in claim 1, characterised in that up to 0.5 % Ni and/or Zn and/or Pb is added to the wire electrode.

3. A wire electrode as claimed in claim 1 or 2, characterised in that the wire electrode is coated with a thin insulating layer which also serves as a lubricant for reducing mechanical friction.

4. A wire electrode as claimed in claim 3, characterised in that the insulating layer is built. up on the basis of saturated aliphatic hydrocarbons.

**Revendications**

1. Fil-électrode pour installation d'électroérosion, destinée au découpage de pièces pour décharges électriques érosives intermittentes, ce fil- électrode comportant une âme de matière conductrice et un revêtement d'une matière à point de volatilisation moins élevé, comme du zinc par exemple, caractérisé en ce que l'âme est constituée d'un des alliages conformes à la norme DIN 17666 ayant les compositions suivantes en poids :

a) Cu Mg 0,4 (0,3 - 0,5 % Mg; impuretés moins de 0,3 %; reste Cu)

b) Cu Fe 2P (2,1 - 2,6 % Fe; 0,015 - 0,15 % P; impuretés moins de 0,5 %; reste Cu)

c) Cu Cr Zr (0,3 - 1,2 % Cr; 0,03 - 0,3 % Zr; impuretés moins de 0,2 %; reste Cu)

d) Cu Zr (0,1 - 0,3 % Zr; impuretés moins de 0,2 %; reste Cu).

2. Fil-électrode selon la revendication 1, caractérisé en ce que l'âme contient en plus jusqu'à 0,5 % Ni et/ou Zr et/ou Pb.

3. Fil-électrode selon la revendication 1 ou 2, caractérisé en ce qu'il est recouvert d'une mince couche isolante, qui sert également de moyen de glissement pour diminuer le frottement mécanique.

4. Fil-électrode selon la revendication 3, caractérisé en ce que la couche isolante est à base d'hydrocarbures aliphatiques saturés.